# EUROPEAN PATENT APPLICATION

(11) **EP 4 790 304 A1**
(43) Date of publication of application: **12.08.2026**
(21) Application number: 25156702.0
(22) Date of filing: 07.02.2025
(51) Int. Cl.: F16M 11/14, H04R 1/08, F16M 11/20

(54) **MULTI-ANGLE CLAMPING ARM**

(71) Applicant: Liao, Tsun-Chi, Taichung City (TW)
(72) Inventor: Liao, Tsun-Chi, Taichung City (TW)
(74) Representative: 2K Patent Partnerschaft mbB

(57) **Abstract**

The present invention provides a multi-angle clamping arm, comprising a first joint (10), a first extension rod (20), a second joint (30), a second extension rod (40), and a universal joint (50), wherein the first and second extension rods (20), (40) are connected to the first and second joints (10), (30), respectively. The first and second extension rods (20), (40) are each fixed at relative rotational angles to the first and second joints (10), (30) via first and second locking components (61), (63) that are not located at the pivot points. Accordingly, the first and second extension rods (20), (40) can be adjusted to a desired angle based on user's needs, and are locked by the first and second locking components (61), (63), which are not at the pivot points. This design allows the clamping arm to withstand larger rotational torques, preventing the first and second extension rods (20), (40) from drooping due to loosening, thus avoiding operational issues and preventing damage to the equipment.

## Description

### FIELD OF THE INVENTION

The present invention relates to a clamping arm, particularly a multi-angle rotating clamping arm.

### BACKGROUND OF THE INVENTION

In the U.S. Patent No. USD1026875, it discloses a "Microphone Arm" that has a fixed end and a suspended end. The fixed end features a clamping seat, which is used to clamp onto the edge of a desk or a flat surface, while the suspended end has a universal joint that locks a microphone clip to mount the microphone. Between the clamping seat and the universal joint, a four-bar linkage structure is employed to provide various degrees of rotational freedom, allowing the user to freely rotate the four-bar linkage and adjust the universal joint to the desired position.

Due to the cantilevered multi-bar linkage structure of the clamping arm, when the joints between the bars have vertical rotational freedom, the joints will experience rotational torque generated by gravity. If the rotational torque on the joint exceeds the fixed torque of the joint, it may cause the linkage to loosen and drop. This can lead to minor inconvenience during use or, in more severe cases, result in equipment damage.

### SUMMARY OF THE INVENTION

The main object of the present invention is to disclose a multi-angle clamping arm that enables are more versatile handling with a simple and cost-efficient configuration.

This problem is solved by a multi-angle clamping arm as claimed in claim 1. Further advantageous embodiments are the subject-matter of the dependent claims.

A multi-angle clamping arm according to the present invention offers in particular the advantage and effect that it can withstand larger rotational torque without easily drooping.

According to the present invention there is provided a multi-angle clamping arm, which includes a first j oint, a first extension rod, a second j oint, a second extension rod, and a universal joint. The first joint includes a first base, a first pivoting component, a first pivot hole, and a first locking groove. The first pivoting component is rotatably arranged on the first base, the first pivot hole is provided on the first pivoting component, and the first locking groove is located on the first pivoting component and surrounds the first pivot hole. The first extension rod is connected to the first pivot hole via a first pivot pin, allowing for angle adjustment, and is fixed at a desired angle by a first locking component in the first locking groove. The second joint includes a second base, a second pivoting component, a second pivot hole, and a second locking groove. The second pivoting component is rotatably arranged on the second base, the second pivot hole is provided on the second pivoting component, and the second locking groove is located on the second pivoting component and surrounds the second pivot hole. The second base is fixed to the first extension rod by a first fixing component. The second extension rod is connected to the second pivot hole via a second pivot pin, allowing for angle adjustment, and is fixed at a desired angle by a second locking component in the second locking groove. The universal joint is fixed to the second extension rod by a second fixing component.

### BRIEF DESCRIPTION OF THE DRAWING

Fig. 1 is a schematic diagram of an overall structure of the present invention.
Fig. 2 is a schematic diagram of a disassembled structure of the present invention
Fig. 3 is a schematic diagram of a usage state of the present invention.
Fig. 4 is a schematic diagram of another usage state of the present invention.
Fig. 5 is a schematic diagram of a storage state of the present invention.

### DETAILED DESCRIPTION OF THE PREFERRED EMBODIMENTS

The technical contents of the present invention are described as follows with reference to the accompanying drawings.

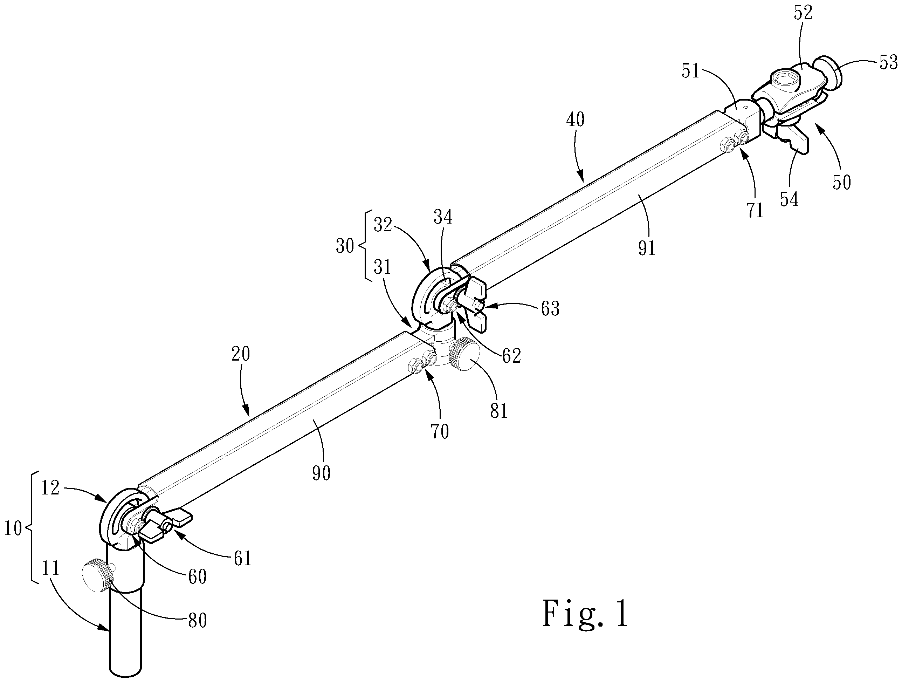

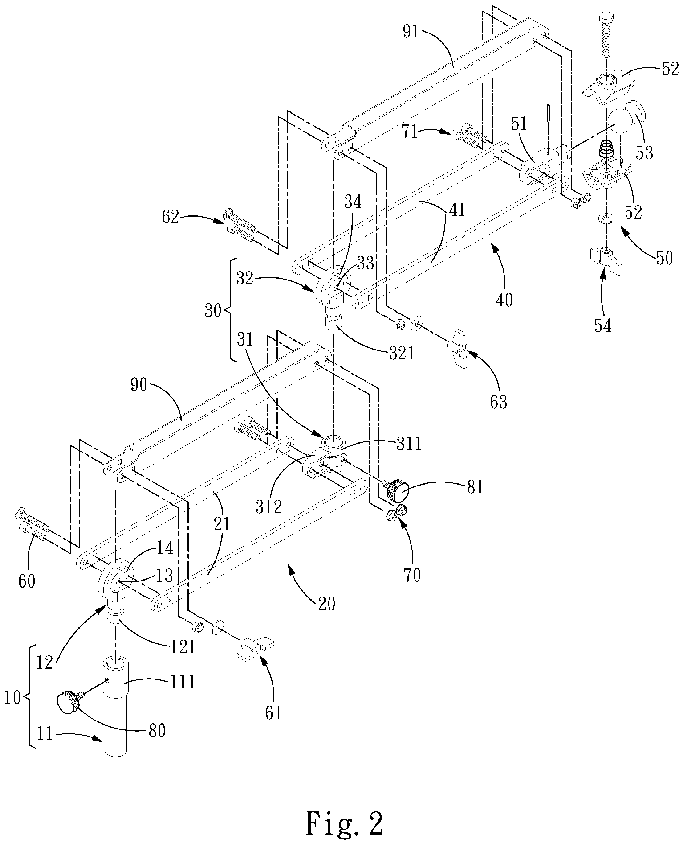

Please refer to FIG. 1 and FIG. 2, the present invention provides a multi-angle clamping arm, which includes a first joint 10, a first extension rod 20, a second joint 30, a second extension rod 40, and a universal joint 50. The first joint 10 includes a first base 11, a first pivoting component 12, a first pivot hole 13, and a first locking groove 14. The first pivoting component 12 is rotatably arranged on the first base 11. In one embodiment, the first base 11 is provided with a tubular body 111, and the first pivoting component 12 includes a cylindrical body 121. The cylindrical body 121 corresponds to and passes through the tubular body 111 to be rotatable, and is tightly fixed by a clamping knob 80 that passes through the tubular body 111.

The first pivot hole 13 is provided on the first pivoting component 12, and the first locking groove 14 is provided on the first pivoting component 12 and surrounds the first pivot hole 13. The first extension rod 20 is connected to the first pivot hole 13 via a first pivot pin 60, allowing for angle adjustment. The angle is then fixed by a first locking component 61 in the first locking groove 14. There is a distance between the first locking component 61 and the first pivot hole 13, which allows for a greater locking torque. This helps the structure withstand larger rotational torques, minimizing the issue of drooping.

In one embodiment, the first locking groove 14 is located on an upper side of the first pivot hole 13, which provides a limiting effect for the first extension rod 20. It restricts a rotational angle of the first extension rod 20 relative to the first joint 10. Even when the first locking component 61 is loosened, the first extension rod 20 can still maintain a horizontal position to prevent drooping.

The second joint 30 includes a second base 31, a second pivoting component 32, a second pivot hole 33, and a second locking groove 34. The second pivoting component 32 is rotatably arranged on the second base 31. In one embodiment, the second base 31 is provided with a tubular body 311, and the second pivoting component 32 is provided with a cylindrical body 321. The cylindrical body 321 corresponds to and passes through the tubular body 311 to be rotatable, and is tightly fixed by a clamping knob 81 that passes through the tubular body 311.

The second pivot hole 33 is provided on the second pivoting component 32, and the second locking groove 34 is provided on the second pivoting component 32 and surrounds the second pivot hole 33. The second base 31 is fixed to the first extension rod 20 by a first fixing component 70. The second extension rod 40 is connected to the second pivot hole 33 via a second pivot pin 62, allowing for angle adjustment. The angle is then fixed by a second locking component 63 in the second locking groove 34. There is a distance between the second locking component 63 and the second pivot hole 33, which allows for a greater locking torque. This helps the structure withstand larger rotational torques, minimizing the issue of drooping. The universal joint 50 is fixed to the second extension rod 40 by a second fixing component 71.

In one embodiment, the second locking groove 34 is located on an upper side of the second pivot hole 33. This provides a limiting effect for the second extension rod 40, restricting its rotational angle relative to the second joint 30. Even when the second locking component 63 is loosened, the second extension rod 40 can maintain a horizontal position to prevent drooping.

In one embodiment, the first extension rod 20 includes two first plates 21. These two first plates 21 clamp the first pivoting component 12 and the second base 31 from both sides. The second base 31 is provided with a wing plate 312 clamped by the two first plates 21. A hollow design lightens a weight of the first extension rod 20. Additionally, in this embodiment, the first extension rod 20 may further include a first shielding shell 90 covering the two first plates 21 to provide protection. The second extension rod 40 includes two second plates 41 clamped the second pivoting component 32 and the universal joint 50 from both sides. The universal joint 50 is provided with an extension plate adapter 51 clamped by the two second plates 41. In this embodiment, the universal joint 50 further includes two clamping plates 52, a ball seat 53, and a locking component 54. The two clamping plates 52 clamp the extension plate adapter 51 and the ball seat 53, with the locking component 54 fixing the ball seat 53 to be rotated universally between the two clamping plates 52. Furthermore, in this embodiment, the second extension rod 40 may also include a second shielding shell 91 covering the two second plates 41 to provide protection.

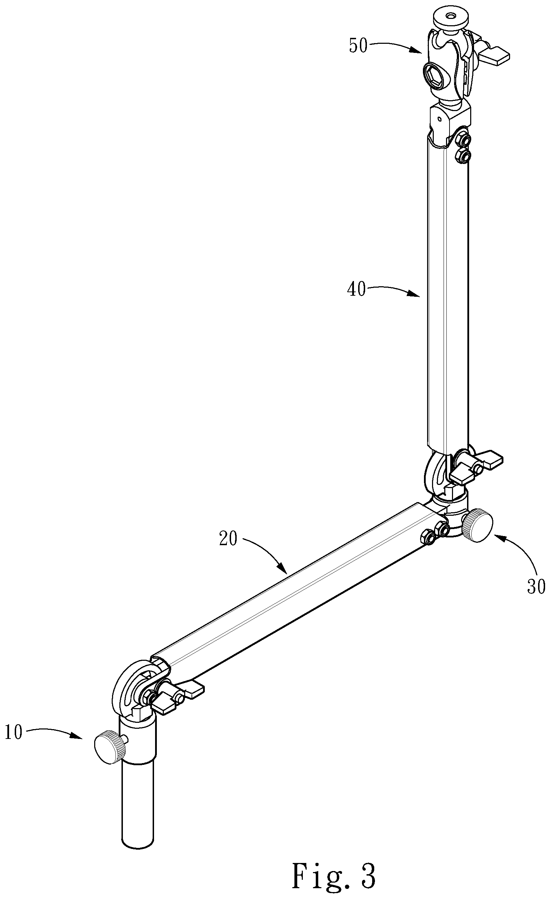

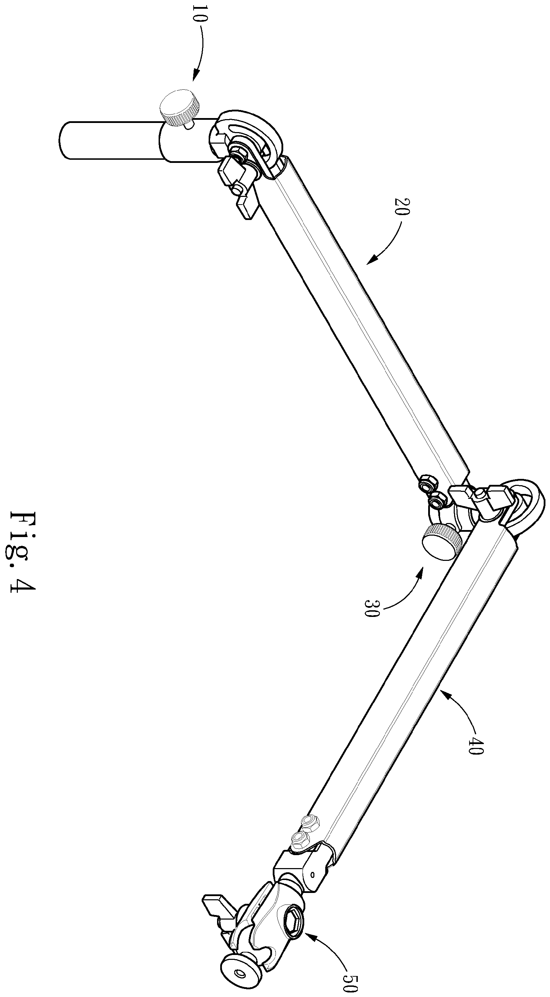

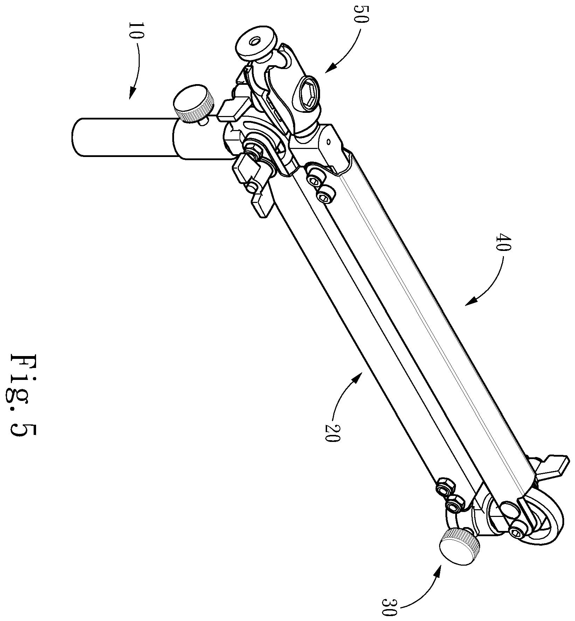

Please refer to FIG. 3, FIG. 4, and FIG. 5. As the structure described above, which allows users to freely (and continuously) adjust relative positions (angles) of the first joint 10, the first extension rod 20, the second joint 30, the second extension rod 40, and the universal joint 50 according to their needs. For example, as shown in FIG. 3, relative to FIG. 1, the second extension rod 40 is rotated 90 degrees upwards. As shown in FIG. 4, relative to FIG. 1, the second extension rod 40 is rotated 90 degrees clockwise. As shown in FIG. 5, relative to FIG. 1, the second extension rod 40 is rotated 180 degrees horizontally, in a storage state, making it easy to store and transport.

As described above, the features of the present invention include at least:
1. The first and second locking components and the first and second pivot holes are spaced apart, which generates a larger locking torque, enabling the structure to withstand larger rotational torques without easily drooping.
2. The first and second locking grooves are located on the upper side of the first and second pivot holes. When the first and second locking components are loosened, the first and second extension rods can still maintain a horizontal position to avoid drooping.
3. The first and second extension rods are made of two first and second plates, respectively, with a hollow design. This reduces the weight of the first and second extension rods.

## Claims

1. A multi-angle clamping arm, comprising:
a first joint (10), comprising a first base (11), a first pivoting component (12) rotatably arranged on the first base (11), a first pivot hole (13) provided on the first pivoting component (12), and a first locking groove (14) provided on the first pivoting component (12) surrounding the first pivot hole (13);
a first extension rod (20), connected to the first pivot hole (13) via a first pivot pin (60), allowing for angle adjustment, and fixed at a desired angle by a first locking component (61) in the first locking groove (14);
a second joint (30), comprising a second base (31), a second pivoting component (32) rotatably arranged on the second base (31), a second pivot hole (33) provided on the second pivoting component (32), and a second locking groove (34) provided on the second pivoting component (32) surrounding the second pivot hole (33), with the second base (31) fixed to the first extension rod (20) by a first fixing component (70);
a second extension rod (40), connected to the second pivot hole (33) via a second pivot pin (62), allowing for angle adjustment, and fixed at a desired angle by a second locking component (63) in the second locking groove (34); and
a universal joint (50), fixed to the second extension rod (40) via a second fixing component (71).

2. The multi-angle clamping arm according to claim 1, wherein the first base (11) and the second base (31) each comprise a tubular body (111, 311), and the first pivoting component (12) and the second pivoting component (32) each comprise a cylindrical body (121), (321) that corresponds to and passes through the tubular body (111, 311) to be rotatable, with each component tightly fixed by a clamping knob (80) passing through the tubular body (111, 311).

3. The multi-angle clamping arm according to claim 1 or 2, wherein the first extension rod (20) includes two first plates (21), with the two first plates (21) clamping the first pivoting component (12) and the second base (31) from both sides.

4. The multi-angle clamping arm according to any of the preceding claims, wherein the second base (31) includes a wing plate (312) provided for the two first plates (21) to clamp.

5. The multi-angle clamping arm according to any of the preceding claims, wherein the multi-angle clamping arm further comprises a first shielding shell (90) covering the two first plates (21).

6. The multi-angle clamping arm according to any of the preceding claims, wherein the second extension rod (40) includes two second plates (41), with the two second plates (41) clamping the second pivoting component (32) and the universal joint (50) from both sides.

7. The multi-angle clamping arm according to claim 6, wherein the universal joint (50) comprises an extension plate adapter (51) clamped by the two second plates (41).

8. The multi-angle clamping arm according to claim 6 or 7, wherein the multi-angle clamping arm further comprises a second shielding shell (91) covering the two second plates (41).

9. The multi-angle clamping arm according to any of the preceding claims, wherein the first locking groove (14) is located on an upper side of the first pivot hole (13).

10. The multi-angle clamping arm according to any of the preceding claims, wherein the second locking groove (34) is located on an upper side of the second pivot hole (33).

## Amended claims

### Amended claims in accordance with Rule 137(2) EPC.

1. A multi-angle clamping arm, comprising:
a first joint (10), comprising a first base (11), a first pivoting component (12) rotatably arranged on the first base (11), and a first pivot hole (13) provided on the first pivoting component (12);
a first extension rod (20), connected to the first pivot hole (13) via a first pivot pin (60);
a second joint (30), comprising a second base (31), a second pivoting component (32) rotatably arranged on the second base (31), and a second pivot hole (33) provided on the second pivoting component (32), wherein the second base (31) is fixed to the first extension rod (20) by a first fixing component (70);
a second extension rod (40), connected to the second pivot hole (33) via a second pivot pin (62); and
a universal joint (50), fixed to the second extension rod (40) via a second fixing component (71);
**characterized by**
a first locking groove (14) provided on the first pivoting component (12) and surrounding the first pivot hole (13), and
a second locking groove (34) provided on the second pivoting component (32) and surrounding the second pivot hole (33), wherein the first extension rod (20) allows for angle adjustment and is fixed at a desired angle by a first locking component (61) in the first locking groove (14), and
the second extension rod (40) allows for angle adjustment and is fixed at a desired angle by a second locking component (63) in the second locking groove (34); wherein
the first base (11) and the second base (31) each comprise a tubular body (111, 311), and the first pivoting component (12) and the second pivoting component (32) each comprise a cylindrical body (121; 321) that corresponds to and passes through the tubular body (111, 311) to be rotatable, with each component tightly fixed by a clamping knob (80) passing through the tubular body (111, 311).

2. The multi-angle clamping arm according to claim 1, wherein the first extension rod (20) includes two first plates (21), with the two first plates (21) clamping the first pivoting component (12) and the second base (31) from both sides.

3. The multi-angle clamping arm according to claim 2, wherein the second base (31) includes a wing plate (312) provided for the two first plates (21) to clamp.

4. The multi-angle clamping arm according to claim 2, wherein the multi-angle clamping arm further comprises a first shielding shell (90) covering the two first plates (21).

5. The multi-angle clamping arm according to any of the preceding claims, wherein the second extension rod (40) includes two second plates (41), with the two second plates (41) clamping the second pivoting component (32) and the universal joint (50) from both sides.

6. The multi-angle clamping arm according to claim 5, wherein the universal joint (50) comprises an extension plate adapter (51) clamped by the two second plates (41).

7. The multi-angle clamping arm according to claim 5 or 6, wherein the multi-angle clamping arm further comprises a second shielding shell (91) covering the two second plates (41).

8. The multi-angle clamping arm according to any of the preceding claims, wherein the first locking groove (14) is located at a side of the first pivot hole (13) opposite to the cylindrical body (121) of the first pivoting component (12).

9. The multi-angle clamping arm according to any of the preceding claims, wherein the second locking groove (34) is located at a side of the second pivot hole (33) opposite to the cylindrical body (321) of the second pivoting component (32).
